# EUROPÄISCHE PATENTSCHRIFT

(11) **EP 0 437 659 B1**
(45) Veröffentlichungstag und Bekanntmachung des Hinweises auf die Patenterteilung: **21.04.1993**
(21) Anmeldenummer: 90100961.3
(22) Anmeldetag: 18.01.1990
(51) Int. Cl.: B23K 11/00, H01R 4/02

(54) **Verfahren und Vorrichtung zum Widerstands-Verschweissen von Anschlussdrähten oder dgl.**
Procedure and device for resistance welding of leads or the like
Procédé et dispositif pour souder des fils de branchement par résistance ou des choses pareilles

(43) Veröffentlichungstag der Anmeldung: 24.07.1991
(73) Patentinhaber: Eckerle, Gerhard, D-77815 Bühl (DE)
(72) Erfinder: Müller, Wilhelm, D-7775 Bermatingen (DE)
(74) Vertreter: Zipse + Habersack

(56) Entgegenhaltungen:
- DE-B- 1 490 969
- US-A- 2 250 156
- PATENT ABSTRACTS OF JAPAN Band 3, Nr. 31 (E-98)(128), 16 März 1979 ; & JP-A-5411487 (MATSUSHITA DENKI SANGYO K.K)

## Beschreibung

Die Erfindung bezieht sich auf ein Verfahren zum Widerstands-Verschweißen von Anschlußdrähten, Litzen oder dgl. miteinander und/oder an einem Flachteil mittels zweier gegenüberliegend angeordneter bewegbarer Elektroden, von denen mindestens eine Elektrode als Formelektrode ausgebildet ist sowie eine Vorrichtung gemäß dem Oberbegriff des Anspruchs 8 (Siehe Z.B US-A-2 250 156, JP-A-5411487).

Anschlußdrähte mit geringem Querschnitt an Flachteilen anzuschließen, ist vielfach mit erheblichen Schwierigkeiten verbunden, da diese Drähte mitunter nur einen Durchmesser von 0,1 mm aufweisen und beim Schweißvorgang somit leicht abgetrennt werden. Eine elektrische Verbindung ist dann nicht mehr gegeben.

Um dies zu vermeiden, ist es zwar bekannt, Anschlußteile, an denen derartige Anschlußdrähte oder Litzen anzuschweißen sind, mit ausgebogenen Haken oder Einlegeschlitze auszustatten, zwischen denen die Anschlußdrähte eingeführt werden. Auf diese Weise sind zwar, obwohl der Querschnitt des Anschlußteils durch das Ausformen der Haken oder Schlitze geschwächt wird, ausreichend widerstandsfähige Schweißverbindungen herzustellen. Der dazu erforderliche Fertigungs- und Arbeitsaufwand ist jedoch, da gesonderte Stanzwerkzeuge zur Verformung der Flachstücke benötigt werden und die dünnen Anschlußdrähte nicht ohne weiteres in die vorgesehenen Nischen einzuführen sind, erheblich. Außerdem können durch Gratkanten die Anschlußdrähte durchtrennt werden. Auch führt deren zum Teil undefinierte Lage auf dem Flachstück zu unsicheren Verbindungen.

Aufgabe der Erfindung ist es daher, ein Verfahren sowie eine Vorrichtung zu schaffen, mittels denen es ohne Schwierigkeiten möglich ist, dünne Anschlußdrähte, Litzen oder dgl. miteinander zu verschweißen und/oder an einem Flachteil durch eine Widerstandsschweißung zuverlässig zu befestigen. Der dazu erforderliche Bau- und Fertigungsaufwand soll gering gehalten werden, auch soll eine besondere Bearbeitung der Flachteile nicht erforderlich sein, dennoch soll bei guter Kontaktgabe eine Verschweißung der Bauteile, die eine hohe mechanische Festigkeit aufweisen, bewerkstelligt werden können. Des weiteren soll erreicht werden, daß beim Schweißvorgang zwischen Elektrode und Werkstück nur ein geringer Übergangswiderstand auftritt und daß der Verschleiß der Elektroden gering zu halten ist.

Diese Aufgabe wird bei einem Verfahren der eingangs genannten Art dadurch gelöst, daß vor dem Schweißvorgang der Formelektrode ein dünnwandiges Kontaktblättchen zugeführt wird, daß sodann das Kontaktblättchen mit geringem Kontaktdruck gegen die Stirnfläche der Formelektrode gepreßt wird, daß daraufhin das Kontaktblättchen an der Stirnfläche der Formelektrode durch einen von dieser in das Kontaktblättchen fließenden Schweißstrom angeheftet wird und daß schließlich durch Auflegen der miteinander zu verbindenden Bauteile auf einer der Elektroden der Schweißvorgang durch Zusammenführen der Elektroden vorgenommen wird.

Zweckmäßig ist es hierbei, das Kontaktblättchen in Form von Bandmaterial der Formelektrode zuzuführen und zur Zuführung des Kontaktblättchens oder des Bandmaterials eine Einschubeinrichtung vorzusehen.

Zum Anpressen des Kontaktblättchens an die Stirnfläche der Formelektrode kann in einfacher Weise die Einschubeinrichtung z. B. mittels einer pneumatisch, hydraulisch oder mechanisch betätigbaren Servoeinrichtung in Richtung der Formelektrode bewegt vorzugsweise geschwenkt werden.

Das Anheften eines Kontaktblättchens an der Stirnfläche der Formelektrode kann derart erfolgen, daß diese und das Kontaktblättchen bzw. das Bandmaterial vorzugsweise über die Einschubeinrichtung kurzzeitig oder ständig an einen Stromkreis angeschlossen werden, wobei von der Formelektrode ein Schweißstrom mit einer Spannung von 2 bis 5 Volt und etwa 100 Ampere fließen sollte.

Um das an der Formelektrode haftende Kontaktblättchen abzutrennen, ist es ferner angezeigt, das Bandmaterial über die Einschubeinrichtung an einen Stromkreis anzuschließen.

Die Vorrichtung zum Widerstandsverschweißen von Anschlußdrähten, Litzen oder dgl. miteinander und/oder an einem Flachteil, mittels zweier gegenüberliegend angeordneter bewegbarer Elektroden, von denen mindestens eine Elektrode als Formelektrode ausgebildet ist, ist dadurch gekennzeichnet, daß der Formelektrode eine Einrichtung zum schrittweisen Einschieben eines dünnwandigen Kontaktblättchens zugeordnet ist, mittels der das Kontaktblättchen gegen die Stirnfläche der Formelektrode preßbar und an dieser mittels eines von der Formelektrode in das Kontaktblättchen fließenden Schweißstromes anheftbar ist.

Das Kontaktblättchen sollte hierbei in seiner Gestaltung etwa der Stirnfläche der Formelektrode angepaßt, vorzugsweise geringfügig kleiner als diese, bemessen und/oder in seinem Volumen auf die Materialmenge der anzuschließenden Anschlußdrähte abgestimmt sein. Auch kann das Kontaktblättchen in Form von Bandmaterial mittels der Einschubeinrichtung der Formelektrode zugeführt werden, wobei das Bandmaterial zum Abtrennen einzelner Kontaktblättchen mit Perforationen, Einschnitten oder dgl. versehen sein sollte.

Zum Anpressen des Kontaktblättchens an die Stirnfläche der Formelektrode kann in einfacher Ausgestaltung die Einschubeinrichtung verstellbar vorzugsweise verschwenkbar gelagert und mittels einer z. B. pneumatisch, hydraulisch oder mechanisch betätigbaren Servoeinrichtung in Richtung der Formelektrode verstellbar sein, auch kann das Kontaktblättchen mittels eines über dieses und die Formelektrode geleiteten Stromstoßes von dem Bandmaterial abgetrennt werden.

Zur Aufnahme des Anschlußdrahtes sollte die Formelektrode ferner mit einer in deren Stirnfläche eingearbeiteten keilförmig ausgebildeten Rille, einer durchgehenden Freisparung oder dgl. versehen sein.

Mittels des erfindungsgemäßen Verfahrens bzw. der gemäß der Erfindung ausgebildeten Vorrichtung ist es auf äußerst einfache und kostengünstige Weise möglich, Anschlußteile miteinander und mit einem Flachteil zu verschweißen, ohne daß die Gefahr besteht, daß während des Schweißvorganges die dünnen Anschlußdrähte abgeschmolzen werden. Mit Hilfe zumindest eines an einer Formelektrode haftenden und mit zu verschweißenden Kontaktblättchens ist nämlich gewährleistet, daß während des Schweißvorganges keine der Elektroden unmittelbar mit den dünnen Anschlußdrähten in Berührung kommt, der Schweißstrom fließt vielmehr von den Elektroden in das Kontaktblättchen und das Flachteil, so daß die zwischen diesen eingelegten Anschlußdrähte mit diesen verschweißt und gewissermaßen eingeschweißt werden.

Durch die in entsprechender Weise ausgebildete Formelektrode ist dabei auch sichergestellt, daß die Anschlußdrähte auf der von dem Flachteil abführenden Seite nicht abgequetscht werden können, daß aber auf der gegenüberliegenden Seite eine Verdichtung eintritt und damit eine gute Verschweißung aller Teile stattfindet. Diese Schweißverbindung weist eine für Anschlußdrähte außerordentlich hohe mechanische Festigkeit, insbesondere in dem mechanisch unempfindlichen Bereich auf, da der gefährdete Querschnitt durch das zusätzliche Material des mitverschweißten Kontaktblättchens verstärkt ist. Des weiteren ist von Vorteil, daß die Standzeit der Elektroden, da durch das Kontaktblättchen eine optimale Kontaktierung während eines Schweißvorganges gegeben ist, außerordentlich hoch ist und daß die dünnen Bauteile vor Vornahme der Verschweißung nicht exakt zu positionieren sind. Durch die Formelektrode sowie das Kontaktblättchen können vielmehr Ungenauigkeiten ausgeglichen werden. Bei einfacher Handhabung ist somit mit Hilfe des vorschlagsgemäßen Verfahrens bzw. der vorschlagsgemäßen Vorrichtung eine Schweißverbindung zwischen dünnen Bauteilen herzustellen, die bei hoher Beanspruchung eine lange Lebensdauer aufweist und eine stets sichere Übertragung elektrischer Energie gewährleistet.

In der Zeichnung ist ein Ausführungsbeispiel der gemäß der Erfindung ausgebildeten Vorrichtung zum Widerstands-Verschweißen von Anschlußdrähten mit einem Flachteil bzw. mit einander mittels zweier Elektroden dargestellt, die nachfolgend im einzelnen erläutert ist. Hierbei zeigt:
- Figuren 1 und 2: die Vorrichtung in schematischer Darstellung in unterschiedlichen Betriebsstellungen,
- Figur 3: die zwischen die beiden Elektroden eingelegten miteinander zu verschweißenden Bauteile,
- Figur 4: die zusammengeführten Elektroden nach Beendigung des Schweißvorganges,
- Figur 5: die mit der Vorrichtung nach Figur 1 herge stellte Schweißverbindung in Vorderansicht,
- Figur 6: die Schweißverbindung nach Figur 5 in Draufsicht,
- Figur 7: zwei Formelektroden zum Verschweißen zweier Anschlußdrähte,
- Figur 8: die Elektroden nach Figur 7 während des Schweißvorganges und
- Figur 9: eine Draufsicht auf eine der Elektroden nach Figur 8 in vergrößerter Darstellung.

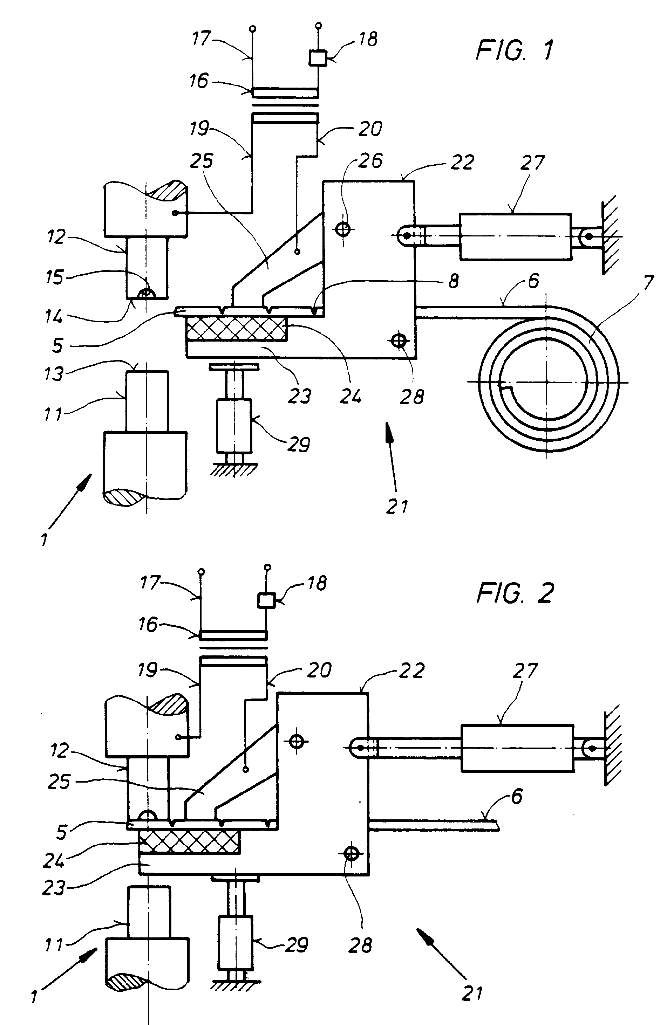

Die in den Figuren 1 und 2 dargestellte und mit 1 bezeichnete Vorrichtung dient zum Verschweißen von dünnen Anschlußdrähten 3 und 4 eines elektrischen Gerätes miteinander und/oder mit einem Flachteil 2 und besteht im wesentlichen aus zwei Elektroden 11 und 12 sowie einer Einschubeinrichtung 21, mittels der Kontaktblättchen 5 der als Formelektrode ausgebildeten Elektrode 12 zuführbar sind, damit während eines Schweißvorganges zusätzliches Material zur Verfügung steht, das mit den Anschlußdrähten 3 und 4 und mit dem Flachteil 2 verschweißt wird. Auf diese Weise wird eine Schweißverbindung mit hoher mechanischer Festigkeit geschaffen.

Die Einschubeinrichtung 21 ist hierbei aus einem Gehäuse 22 sowie einer Unterlage 23 gebildet, auf der das von einer Rolle 7 abgenommene in Form von Bandmaterial 6 der Formelektrode 12 zuzuführende Kontaktblättchen 5 abgestützt ist. Mittels einer Servoeinrichtung 27 ist die Einschubeinrichtung 21 schrittweise in Richtung der Elektroden 11 und 12 vorschiebbar, um an der Formelektrode 12 jeweils ein Kontaktblättchen 5 anheften zu können. Des weiteren weist die Einschubeinrichtung 21 einen um einen Gelenkbolzen 26 verschwenkbar gelagerten Niederhalter 25 auf und deren Unterlage 23 ist mit einer Isolation 24 versehen. Über eine Leitung 20 ist der Niederhalter 25 an einen in einen Stromkreis 17 eingeschalteten Transformator 16 angeschlossen, der über eine weitere Leitung 19 mit der Formelektrode 12 verbunden ist.

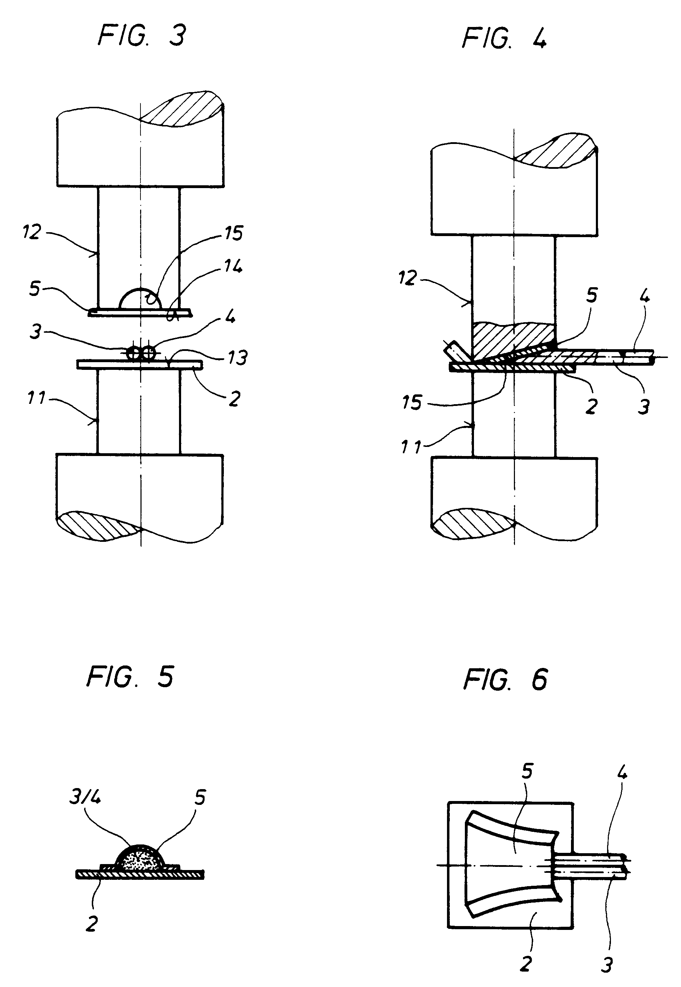

Die Stirnfläche 14 der Formelektrode 12 ist mit einer keilförmig ausgebildeten Rille 15 ausgestattet, um die Anschlußdrähte 3 und 4 aufnehmen zu können. Die Stirnfläche 13 der Elektrode 12 ist dagegen glattflächig gestaltet. Dadurch wird erreicht, daß, wie dies in Figur 4 dargestellt ist, die Anschlußdrähte 3, 4 auf der einen Seite zusammengedrückt und, da dadurch eine intensive Erwärmung stattfindet, fest miteinander, mit dem Kontaktblättchen 5 und mit dem Flachteil 2 verschweißt werden, auf der Auslaufzone aber nicht beschädigt werden können.

Vor Beginn eines Schweißvorganges wird, wie dies in Figur 2 gezeigt ist, jeweils ein Kontaktblättchen 5 an der Formelektrode 12 angeheftet. Die Einschubeinrichtung 21, in der das Bandmaterial 6 mit einer Perforation 8 versehen werden kann, wird dazu mit Hilfe der Servoeinrichtung 27 verfahren, so daß das Kontaktblättchen 5 eine Lage unterhalb der Stirnfläche 14 der Formelektrode 12 einnimmt. Sodann wird dieses an der Stirnfläche 12 angelegt. Die Einschubeinrichtung 21 ist, um dies bewerkstelligen zu können, um einen Gelenkbolzen 28 verschwenkbar gelagert und dieser ist eine weitere Servoeinrichtung 29 zugeordnet, die auf die Unterlage 23 einwirkt.

Durch einen von der Formelektrode 12 in das Kontaktblättchen 5 fließenden von dem Transformator 16 abgegebenen Strom von z. B. 2 bis 5 V und 100 Amp wird dieses daraufhin an der Stirnfläche 14 der Formelektrode 12 angeheftet. Außerdem wird, da der Strom auch über das Bandmaterial 6 fließt, das Kontaktblättchen 5 von diesem abgetrennt. Die Perforation 8 begünstigt diese Trennung, ein mechanisches Abscheren ist somit nicht erforderlich.

Beim Andrücken des Kontaktblättchens 5 an die Stirnfläche 14 der Formelektrode 12 kann diese bereits unter Strom stehen, so daß dieses sofort haftet und gegebenenfalls auch gleichzeitig von dem Bandmaterial 6 abgetrennt wird. Es ist aber auch möglich, mit Hilfe eines in den Stromkreis 17 eingeschalteten Schaltgerätes 18 der Formelektrode 12 einzelne Stromstöße zum Anheften des Kontaktblättchens 5 und/oder zum Abrennen von dem Bandmaterial 6 zuzuleiten.

Nach dem Zurückführen der Einschubeinrichtung 21 werden, um eine Verschweißung vorzunehmen, auf der Stirnfläche 13 der Elektrode 12 das Flachteil 2 sowie auf diesem die Anschlußdrähte 3 und 4, wie dies der Figur 3 entnommen werden kann, aufgelegt und durch Zusammenführen der Elektroden 11 und 12 wird der Schweißvorgang ausgeführt. Gemäß Figur 4 werden dabei die Anschlußdrähte 3 und 4 und das Kontaktblättchen 5 fest miteinander und mit dem Flachteil 2 verschweißt, so daß, wie dies den Figuren 5 und 6 zu entnehmen ist, aufgrund der Verstärkung des gefährdeten Querschnittes eine Schweißverbindung mit hoher mechanischer Festigkeit geschaffen wird, ohne daß die Anschlußdrähte 3 und 4 auf der abführenden Seite beschädigt werden können.

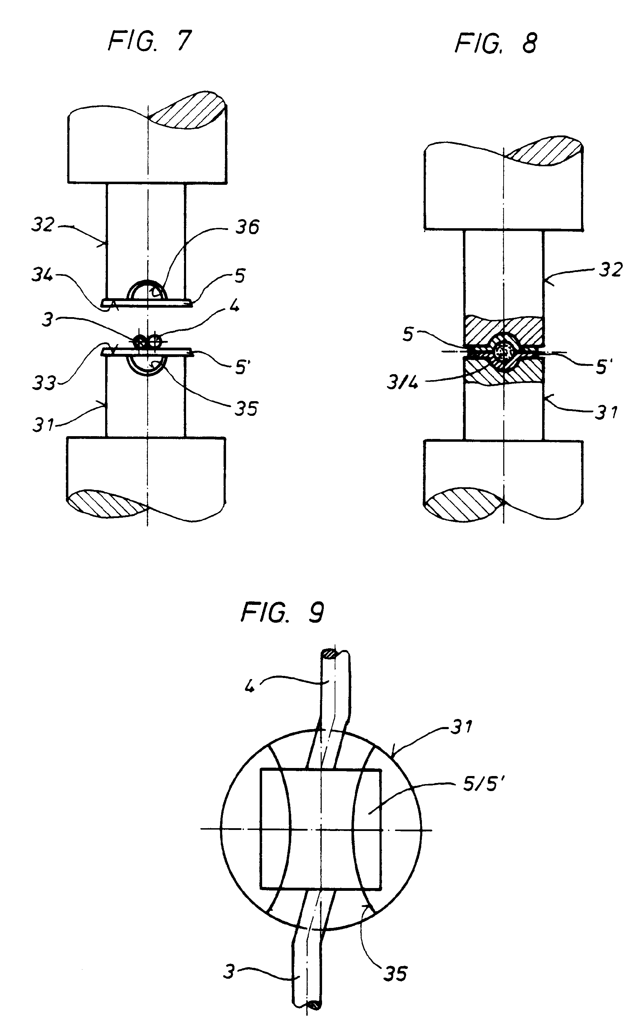

Bei dem Ausführungsbeispiel nach den Figuren 7 und 8 können mit Hilfe der Elektroden 31 und 32 zwei Anschlußdrähte 3 und 4 mit geringem Durchmesser miteinander verschweißt werden. Die Elektroden 31 und 32 sind dazu als Formelektroden ausgebildet, indem in deren Stirnflächen 33 und 34 durchgehende Freisparungen 35 und 36 zur Aufnahme der Anschlußdrähte 3 und 4 eingearbeitet sind. Außerdem ist jede der Elektroden 31, 32 mit einem angehefteten Kontaktblättchen 5 bzw. 5' ausgestattet, so daß die Anschlußdrähte 3 und 4, wie dies den Figuren 8 und 9 zu entnehmen ist, beim Verschweißen ummantelt werden und trotz der geringen Querschnitte der Anschlußdrähte 3 und 4 eine Schweißverbindung mit hoher mechanischer Festigkeit gegeben ist.

## Patentansprüche

1. Verfahren zum Widerstands-Verschweißen von Anschlußdrähten, Litzen (3,4) od.dgl. miteinander und/oder an einem Flachteil (2) mittels zweier gegenüberliegend angeordneter bewegbarer Elektroden (11,12;31,32), von denen mindestens eine Elektrode (12;31,32) als Formelektrode ausgebildet ist,
**dadurch gekennzeichnet**,
daß vor dem Schweißvorgang der Formelektrode (12;31,32) ein dünnwandiges Kontaktblättchen (5, 5') zugeführt wird, daß sodann das Kontaktblättchen (5, 5') mit geringem Kontaktdruck gegen die Stirnfläche (14; 33, 34) der Formelektrode (12; 31, 32) gepreßt wird,
daß daraufhin das Kontaktblättchen (5, 5') an der Stirnfläche (14; 33, 34) der Formelektrode (12; 31, 32) durch einen von dieser in das Kontaktblättchen (5, 5') fließenden Schweißstrom angeheftet wird und
daß schließlich durch Auflegen der miteinander zu verbindenden Bauteile (2, 3, 4) auf einer der Elektroden (11; 31) der Schweißvorgang durch Zusammenführen der Elektroden (11, 12; 31, 32) vorgenommen wird.

2. Verfahren nach Anspruch 1,
**dadurch gekennzeichnet**,
daß das Kontaktblättchen (5) in Form von Bandmaterial (6) der Formelektrode (12) zugeführt wird.

3. Verfahren nach Anspruch 1 oder 2,
**dadurch gekennzeichnet**,
daß das Kontaktblättchen (5) oder das Bandmaterial (6) mittels einer Einschubeinrichtung (21) der Formelektrode (12) zugeführt wird.

4. Verfahren nach einem oder mehreren der Ansprüche 1 bis 3,
**dadurch gekennzeichnet**,
daß zum Anpressen des Kontaktblättchens (5) an die Stirnfläche (14) der Formelektrode (12) die Einschubeinrichtung (21) z. B. mittels einer pneumatisch, hydraulisch oder mechanisch betätigbaren Servoeinrichtung (29) in Richtung der Formelektrode (12) bewegt, vorzugsweise verschwenkt, wird.

5. Verfahren nach einem oder mehreren der Ansprüche 1 bis 4,
**dadurch gekennzeichnet**,
daß zum Anheften eines Kontaktblättchens (5) an der Stirnfläche (14) der Formelektrode (12) diese und das Kontaktblättchen (5) bzw. das Bandmaterial (6) vorzugsweise über die Einschubeinrichtung (21) kurzzeitig oder ständig an einen Stromkreis (19, 20) angeschlossen werden.

6. Verfahren nach Anspruch 5,
**dadurch gekennzeichnet**,
daß zum Anheften des Kontaktblättchens (5) an der Stirnfläche (14) der Formelektrode (12) von dieser ein Schweißstrom mit einer Spannung von 2 bis 5 Volt und etwa 100 Ampere fließt.

7. Verfahren nach einem oder mehreren der Ansprüche 1 bis 6,
**dadurch gekennzeichnet**,
daß zum Abtrennen des an der Formelektrode (12) haftenden Kontaktblättchens (5) von dem vorzugsweise perforierten Bandmaterial (6) dieses über die Einschubeinrichtung (21) an einen Stromkreis (19, 20) angeschlossen wird.

8. Vorrichtung zum Widerstandsverschweißen von Anschlußdrähten, Litzen (3,4) od.dgl. miteinander und/oder an einem Flachteil (2), mittels zweier gegenüberliegend angeordneter bewegbarer Elektroden, (11,12) von denen mindestens eine Elektrode (12) als Formelektrode ausgebildet ist,
**dadurch gekennzeichnet**,
daß der Formelektrode (12) eine Einrichtung (21) zum schrittweisen Einschieben eines dünnwandigen Kontaktblättchens (5) zugeordnet ist, mittels der das Kontaktblättchen (5) gegen die Stirnfläche (14) der Formelektrode (12) preßbar und an dieser mittels eines von der Formelektrode (12) in das Kontaktblättchen (5) fließenden Schweißstromes anheftbar ist.

9. Vorrichtung nach Anspruch 8,
**dadurch gekennzeichnet**,
daß das Kontaktblättchen (5, 5') in seiner Gestaltung etwa der Stirnfläche (14; 33, 34) der Formelektrode (12; 31, 32) angepaßt, vorzugsweise geringfügig kleiner als diese, bemessen und/oder in seinem Volumen auf die Materialmenge der anzuschließenden Anschlußdrähte (3, 4) abgestimmt ist.

10. Vorrichtung nach Anspruch 8 oder 9,
**dadurch gekennzeichnet**,
daß das Kontaktblättchen (5) in Form von Bandmaterial (6) mittels der Einschubeinrichtung (21) der Formelektrode (12) zuführbar ist.

11. Vorrichtung nach Anspruch 10,
**dadurch gekennzeichnet**,
daß das Bandmaterial (6) zum Abtrennen einzelner Kontaktblättchen (5) mit Perforationen (8), Einschnitten od. dgl. versehen ist.

12. Vorrichtung nach einem oder mehreren der Ansprüche 8 bis 11,
**dadurch gekennzeichnet**,
daß zum Anpressen des Kontaktblättchens (5) an die Stirnfläche (14) der Formelektrode (12) die Einschubeinrichtung (21) verstellbar, vorzugsweise verschwenkbar, gelagert und mittels einer z.B. pneumatisch, hydraulisch oder mechanisch betätigbaren Servoreinrichtung (29) in Richtung der Formelektrode (12) verstellbar ist.

13. Vorrichtung nach einem oder mehreren der Ansprüche 8 bis 12,
**dadurch gekennzeichnet**,
daß das Kontaktblättchen (5) mittels eines über dieses und die Formelektrode (12) geleiteten Stromstoßes von dem Bandmaterial (6) abtrennbar ist.

14. Vorrichtung nach einem oder mehreren der Ansprüche 8 bis 13,
**dadurch gekennzeichnet**,
daß die Formelektrode (12; 31, 32) zur Aufnahme des Anschlußdrahtes (3, 4) mit einer in deren Stirnfläche (14; 33, 34) eingearbeiteten keilförmig ausgebildeten Rille (15), einer durchgehenden Freisparung (35, 36) od.dgl. versehen ist.

## Claims

1. Process for the resistance welding of leads, flexes (3, 4) or the like together and/or on to a flat part (2) by means of two movable electrodes (11, 12; 31, 32) arranged opposite each other, of which at least one electrode (12; 31, 32) is formed as a moulded electrode, characterised in that, before the welding, a thin contact lamina (5, 5') is brought to the moulded electrode (12; 31, 32), that the contact lamina (5, 5') is then pressed, using slight contact pressure, against the front face (14; 33, 34) of the moulded electrode (12; 31, 32), that the contact lamina (5, 5') is then attached to the front (14; 33, 34) of the moulded electrode (12; 31, 32) by a welding current flowing from this into the contact lamina (5, 5') and that finally, by placing the components (2, 3, 4) which are to be connected together on to one of the electrodes (11; 31), the welding process is carried out by bringing together the electrodes (11, 12; 31, 32).

2. Process according to claim 1,
characterised in that the contact lamina (5) is supplied to the moulded electrode (12) in the shape of strip material (6).

3. Process according to claim 1 or 2,
characterised in that the contact lamina (5) or the strip material (6) is supplied to the moulded electrode (12) by means of an insertion device (21).

4. Process according to one or several of claims 1 to 3,
characterised in that, to press the contact lamina (5) on to the front face (14) of the moulded electrode (12), the insertion device (21) is moved, preferably pivotally, in the direction of the moulded electrode (12), for example by means of a pneumatic, hydraulic or mechanically-operated servo-device (29).

5. Process according to one or several of claims 1 to 4,
characterised in that, to attach a contact lamina (5) on to the front face (14) of the moulded electrode (12), this and the contact lamina (5) or the strip material (6) are connected, preferably via the insertion device (21), to an electrical circuit (19, 20), for a short time or permanently.

6. Process according to claim 5,
characterised in that, to attach the contact lamina (5) on to the front face (14) of the moulded electrode (12), a welding current with a voltage of between 2 and 5 volts and approximately 100 amps flows from this.

7. Process according to one or several of claims 1 to 6,
characterised in that, to detach the contact lamina (5) which is stuck on to the moulded electrode (12) from the strip material (6), which is preferably perforated, this is connected to an electrical circuit (19, 20) via the insertion device (21).

8. Device for resistance welding of leads, flexes (3, 4) or the like together and/or on to a flat part (2), by means of two movable electrodes (11, 12) arranged opposite each other, of which at least one electrode (12) is formed as a moulded electrode,
characterised in that a device (21) for the stepwise insertion of a thin contact lamina (5) is allocated to the moulded electrode (12), by means of which device the contact lamina (5) may be pressed against the front face (14) of the moulded electrode (12) and may be attached to this by means of a welding current flowing from the moulded electrode (12) into the contact lamina (5).

9. Device according to claim 8,
characterised in that the shape of the contact lamina (5, 5') is adapted approximately to the front face (14; 33, 34) of the moulded electrode (12; 31, 32), preferably slightly smaller than this, measured and/or its volume matched to the quantity of material of the connecting leads (3, 4) to be connected.

10. Device according to claim 8 or 9,
characterised in that the contact lamina (5), in the form of strip material (6), may be supplied to the moulded electrode (12) by means of the insertion device (21).

11. Device according to claim 10,
characterised in that the strip material (6), to separate the individual contact laminae (5), has perforations (8), incisions or the like.

12. Device according to one or several of claims 8 to 11
characterised in that, to press the contact lamina (5) on to the front face (14) of the moulded electrode (12), the insertion device (21) is adjustably, preferably pivotally, mounted and may be moved in the direction of the moulded electrode (12) by means of for example a pneumatic, hydraulic, or mechanically-operated servo-device (29).

13. Device according to one or several of claims 8 to 12,
characterised in that the contact lamina (5) may be detached from the strip material (6) by means of an electric shock fed across this and the moulded electrode (12).

14. Device according to one or several of claims 8 to 13,
characterised in that the moulded electrode (12; 31, 32) is provided with a wedge-shaped groove (15) to accept the lead (3, 4) incorporated in its front (14; 33, 34), and with a through free space (35, 36) or the like.

## Revendications

1. Procédé pour souder par résistance, les uns aux autres et/ou sur une pièce aplatie (2), des fils de raccordement, des cordons de branchement (3, 4) ou éléments similaires, au moyen de deux électrodes (11, 12 ; 31, 32) mobiles, situées en regard l'une de l'autre et parmi lesquelles au moins une électrode (12 ; 31, 32) est réalisée sous la forme d'une électrode profilée,
caractérisé par le fait
que, préalablement au processus de soudage, une feuille de contact (5, 5') à paroi mince est présentée à l'électrode profilée (12 ; 31, 32) ;
que la feuille de contact (5, 5') est ensuite pressée, avec faible pression de contact, contre la face extrême (14 ; 33, 34) de l'électrode profilée (12 ; 31, 32) ;
que, dans l'enchaînement, la feuille de contact (5, 5') est fixée à la face extrême (14 ; 33, 34) de l'électrode profilée (12 ; 31, 32), par un courant de soudage circulant de cette dernière vers la feuille de contact (5, 5') ; et
que, pour finir, le processus de soudage est exécuté par rapprochement des électrodes (11, 12 ; 31, 32) en plaçant, sur l'une (11 ; 31) des électrodes, les éléments constitutifs (2, 3, 4) devant être solidarisés.

2. Procédé selon la revendication 1,
caractérisé par le fait
que la feuille de contact (5) est présentée à l'électrode profilée (12) sous la forme d'un matériau en bande (6).

3. Procédé selon la revendication 1 ou 2,
caractérisé par le fait
que la feuille de contact (5) ou le matériau en bande (6) est présenté(e) à l'électrode profilée (12) au moyen d'un dispositif d'insertion (21).

4. Procédé selon l'une ou plusieurs des revendications 1 à 3,
caractérisé par le fait
que, en vue de presser la feuille de contact (5) contre la face extrême (14) de l'électrode profilée (12), le dispositif d'insertion (21) est animé d'un mouvement, de préférence d'un pivotement en direction de l'électrode profilée (12), par exemple au moyen d'un dispositif asservi (29) actionnable pneumatiquement, hydrauliquement ou mécaniquement.

5. Procédé selon l'une ou plusieurs des revendications 1 à 4,
caractérisé par le fait
que, pour fixer une feuille de contact (5) à la face extrême (14) de l'électrode profilée (12), cette dernière et la feuille de contact (5) ou le matériau en bande (6) sont respectivement raccordé(e)s à un circuit électrique (19, 20), un court instant ou en permanence, de préférence par l'intermédiaire du dispositif d'insertion (21).

6. Procédé selon la revendication 5,
caractérisé par le fait
que, pour fixer la feuille de contact (5) à la face extrême (14) de l'électrode profilée (12), un courant de soudage d'environ 100 ampères, d'une tension de 2 à 5 volts, circule à partir de ladite électrode.

7. Procédé selon l'une ou plusieurs des revendications 1 à 6,
caractérisé par le fait
que, pour dissocier la feuille de contact (5) adhérant à l'électrode profilée (12), d'avec le matériau en bande (6) de préférence perforé, ce dernier est raccordé à un circuit électrique (19, 20) par l'intermédiaire du dispositif d'insertion (21).

8. Dispositif pour souder par résistance, les uns aux autres et/ou sur une pièce aplatie (2), des fils de raccordement, des cordons de branchement (3, 4) ou éléments similaires, au moyen de deux électrodes (11, 12) mobiles, situées en regard l'une de l'autre et parmi lesquelles au moins une électrode (12) est réalisée sous la forme d'une électrode profilée,
caractérisé par le fait
qu'un dispositif (21) est affecté à l'électrode profilée (12) pour insérer, en mode pas à pas, une feuille de contact (5) à paroi mince, dispositif au moyen duquel la feuille de contact (5) peut être pressée contre la face extrême (14) de l'électrode profilée (12), et peut être fixée à cette dernière au moyen d'un courant de soudage circulant de l'électrode profilée (12) vers la feuille de contact (5).

9. Dispositif selon la revendication 8,
caractérisé par le fait
que la feuille de contact (5, 5') est d'une configuration sensiblement adaptée à celle de la face extrême (14 ; 33, 34) de l'électrode profilée (12 ; 31, 32), est de préférence dimensionnée légèrement plus petite que cette dernière, et/ou présente un volume correspondant à la quantité de matière des fils de raccordement (3, 4) à connecter.

10. Dispositif selon la revendication 8 ou 9,
caractérisé par le fait
que la feuille de contact (5) peut être présentée à l'électrode profilée (12) sous la forme d'un matériau en bande (6), au moyen du dispositif d'insertion (21).

11. Dispositif selon la revendication 10,
caractérisé par le fait
que le matériau en bande (6) est pourvu de perforations (8), d'encoches ou configurations similaires en vue de la séparation de feuilles de contact (5) individuelles.

12. Dispositif selon l'une ou plusieurs des revendications 8 à 11,
caractérisé par le fait
que, en vue de presser la feuille de contact (5) contre la face extrême (14) de l'électrode profilée (12), le dispositif d'insertion (21) est monté mobile, de préférence pivotant, et peut être déplacé en direction de l'électrode profilée (12) au moyen d'un dispositif asservi (29) pouvant être actionné, par exemple, pneumatiquement, hydrauliquement ou mécaniquement.

13. Dispositif selon l'une ou plusieurs des revendications 8 à 12,
caractérisé par le fait
que la feuille de contact (5) peut être séparée du matériau en bande (6) au moyen d'un appel de courant conduit par l'intermédiaire de ladite feuille et de l'électrode profilée (12).

14. Dispositif selon l'une ou plusieurs des revendications 8 à 13,
caractérisé par le fait
que, pour recevoir le fil de raccordement (3, 4), l'électrode profilée (12 ; 31, 32) est dotée d'une saignée (15) de réalisation cunéiforme, façonnée dans sa face extrême (14 ; 33, 34), d'une dépouille ininterrompue (35, 36) ou d'une configuration similaire.
